# EUROPEAN PATENT SPECIFICATION

(11) **EP 1 858 625 B1**
(45) Date of publication and mention of the grant of the patent: **04.05.2011**
(21) Application number: 06723234.8
(22) Date of filing: 06.03.2006
(51) Int. Cl.: B01D 53/04

(54) **SYSTEM FOR SUPPRESSING CARBON DIOXIDE FROM CONTROLLED ATMOSPHERE ENVIRONMENTS**
SYSTEM ZUR UNTERDRÜCKUNG VON KOHLENDIOXID AUS UMGEBUNGEN MIT KONTROLLIERTER ATMOSPHÄRE
SYSTEME POUR L'ELIMINATION DE DIOXYDE DE CARBONE A PARTIR D'ENVIRONNEMENTS D'ATMOSPHERE CONTROLEE

(30) Priority: 16.03.2005 IT VR20050034
(43) Date of publication of application: 28.11.2007
(73) Proprietor: Marvil Engineering S.R.L., 39040 Salorno (BZ) (IT)
(72) Inventor: VILLA, Ivano, I-39100 Bolzano (IT); MERCADINI, Massimo, I-39044 Egna (IT)
(74) Representative: Alagem Modiano, Lara S.
(86) International application number: PCT/EP2006/002034
(87) International publication number: WO 2006/097217

(56) References cited:
- EP-A- 0 467 668
- WO-A-2005/039739
- GB-A- 2 190 014
- US-A- 3 594 986
- US-A- 3 740 928
- US-A- 5 876 485

## Description

### Technical Field

The present invention relates to a system for suppressing carbon dioxide from controlled atmosphere environments.

### Background Art

Conventionally, the reduction of carbon dioxide (CO₂) in storage rooms for preserving fruit with a low CO₂ and oxygen content is performed in various manners, including the following:
- introduction in the storage rooms of chemical substances, such as calcium hydrate, capable of reacting with CO₂ to obtain solid compounds;
- use of machines which draw the CO₂-rich air in order to bring it into contact with particular chemical substances, such as aqueous solutions of potassium hydrate or of particular amines, which react with the CO₂ that is present in the air, the purified air being then returned to the storage room;
- introduction of nitrogen in the storage room, consequently reducing the CO₂ that is present by air exchange;
- use of activated-carbon absorbers, modified so as to have an injection of nitrogen in the filters, which allows to reduce the amount of oxygen-rich air which normal activated-carbon absorbers introduce in the storage rooms after each step for regenerating the filters with external air.

The first two methods require very intensive work, considerable workforce and entail considerable costs for the disposal of the spent chemical substances.

The third method entails very high operating costs, due to the cost of supplying nitrogen, while the fourth method is by far the most valid but requires the availability of additional devices for generating and storing the nitrogen and accordingly requires heavy plant investments and operating costs.

In order to try to solve the drawbacks noted above, systems have been proposed which have one or more activated-carbon filters and one or more filters for absorbing oxygen using molecular or chemical type sieves, which are designed to absorb either the oxygen from the air before it is introduced in the storage room or the oxygen that is present in the activated-carbon filters before the passage of the air to be filtered. These systems, moreover, are disclosed in Italian patent no. 1,297, 501 by Villa Ivano and Mercadini Massimo.

However, presently the need is particularly felt to preserve food, particularly fruit, in environments which have an extremely low oxygen content but also a low CO₂ content. Document US3740928 discloses a system for adsorbing carbon dioxide from air in a storage system for fruit, vegetables and the like.

### Disclosure of the Invention

The aim of the present invention is to provide a system for suppressing carbon dioxide from controlled atmosphere environments, particularly from storage rooms for preserving food products such as fruit, which is capable of eliminating or in any case reducing drastically the drawbacks noted in the systems currently in use.

This aim and this and other objects, which will become better apparent hereinafter, are achieved by a system for suppressing carbon dioxide from controlled atmosphere environments, comprising at least one activated-carbon filter, which is connected to an intake duct and a discharge duct, adapted to introduce and extract air into and from a storage room, at least one blower being provided along said discharge duct, said blower having, upstream or downstream of said at least one activated-carbon filter, in succession, a discharge duct which can be controlled by a check valve, and a first valve, characterized in that said blower is associated with a reversal valve, which is adapted to switch the flow during the regeneration step so as to perform the regeneration of said at least one activated-carbon filter in countercurrent.

### Brief Description of the Drawings

Further characteristics and advantages of the invention will become better apparent from the description of some preferred but not exclusive embodiments of a system for suppressing carbon dioxide from controlled atmosphere environments according to the invention, illustrated by way of non-limiting example in the accompanying drawings, wherein:
Figure 1 is a schematic view of a system with an activated-carbon filter and with discontinuous purification according to the present invention;
Figure 2 is a diagram of a system with two activated-carbon filters with continuous purification during the step for absorption by the activated-carbon filter A and regeneration of the activated-carbon filter B;
Figure 3 is a diagram of a system with two activated-carbon filters with continuous treatment in the first switching step;
Figure 4 is a diagram of a system with two activated-carbon filters with continuous purification during the step for absorption by the activated-carbon filter B and regeneration of the activated-carbon filter A;
Figure 5 is a diagram of a system with two activated-carbon filters with continuous purification during the second switching step.

### Ways of carrying out the Invention

In the examples of embodiments that follow, individual characteristics, given in relation to specific examples, may actually be interchanged with other different characteristics that exist in other examples of embodiments.

Moreover, it is noted that anything found to be already known during the patenting process is understood not to be claimed and to be the subject of a disclaimer.

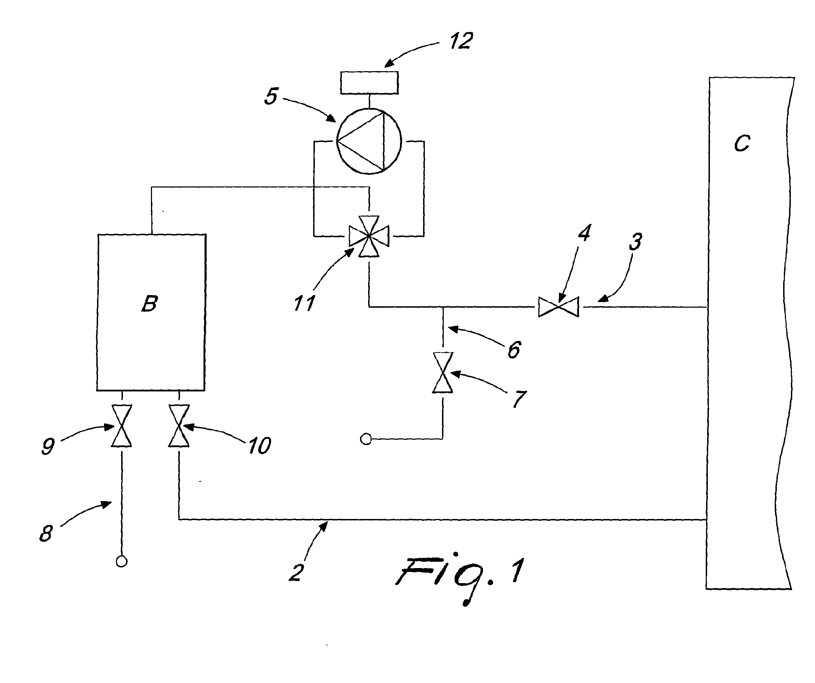

Initially with reference to the diagram of Figure 1, the reference numeral 1 generally designates a system according to the invention, which has at least one controlled-atmosphere storage room C, typically a fruit preservation room, an intake duct 2 and a discharge duct 3 for the air to be introduced into, and removed from, the storage room C.

The system 1 has at least one activated-carbon filter B, which is connected to the storage room C by means of the intake duct 2 and the discharge duct 3.

In particular, the activated-carbon filter B is capable of trapping the CO₂ contained in the fluid medium which flows through it and is connected in parallel to the intake duct 2 and to the discharge duct 3.

A first valve 4 is provided on the discharge duct 3 and a blower 5 is arranged downstream of said first valve; a first discharge duct 6 is connected between the first valve 4 and the blower 5 and is controlled by a first valve 7.

The activated-carbon filter B is connected to a second discharge duct 8, which is controlled by a first valve 9, while a second valve 10 is provided along the intake duct 2.

According to the present invention, the blower 5 is associated with a reversal valve 11, which is adapted to exchange the stream during the regeneration step, so as to regenerate the activated-carbon filter B in countercurrent.

Advantageously, the blower 5 is functionally connected to an inverter 12, which is associated with a control device (not shown in the figures) and is adapted to increase the speed of the blower 5 (and therefore the flow-rate of the fluid medium through the discharge duct 3) during the step for regeneration of the activated-carbon filter B.

The valves 4, 7, 9 and 10 must be gas-tight, and despite being shown as single valves can of course be grouped in a three-way arrangement.

Therefore, the system 1 described above has a single activated-carbon filter B with discontinuous purification and operates according to four steps.

During the first step, or CO₂ absorption step, the valves 4 and 10 are open and the reversal valve 11 is in the normal position. The blower 5 draws air from the storage room C, sends it to the activated-carbon filter B and returns purified air to the storage room C. Typically, the duration of this first step is approximately 5-10 minutes. If an inverter 12 is used, during this step a reduced speed of the blower 5 is used at the beginning of the step, increasing it a few seconds before said step ends.

In the second step, or exchange step, the valves 7 and 10 are open and the reversal valve 11 is still in the normal position; the blower 5 draws external air and sends it to the activated-carbon filter B; said air, depleted of its oxygen, is introduced in the storage room C. The duration of this second step is on the order of 10-20 seconds.

The third step, or regeneration step, is performed with the valves 7 and 9 open and with the reversal valve 11 in the switching position. The blower 5 draws external air from the valve 9, conveys it through the activated-carbon filter B, and returns it outside. The duration of this step is similar to the duration of the first step if the inverter 12 is present. Otherwise, i.e., if the speed of the blower 5 is constant, it is convenient to provide a duration which is slightly longer by approximately 10-20%.

In the fourth step, or decompensation step, the valves 4 and 9 are open and the reversal valve 11 is in the normal position. The blower 5 draws air from the storage room C by means of the valve 4 and sends it to the activated-carbon filter B, and the air that passes through the activated-carbon filter B is then expelled externally. The duration of this step is approximately 10-20 seconds, depending on the flow-rate of the blower 5.

The cycle then resumes from the first step.

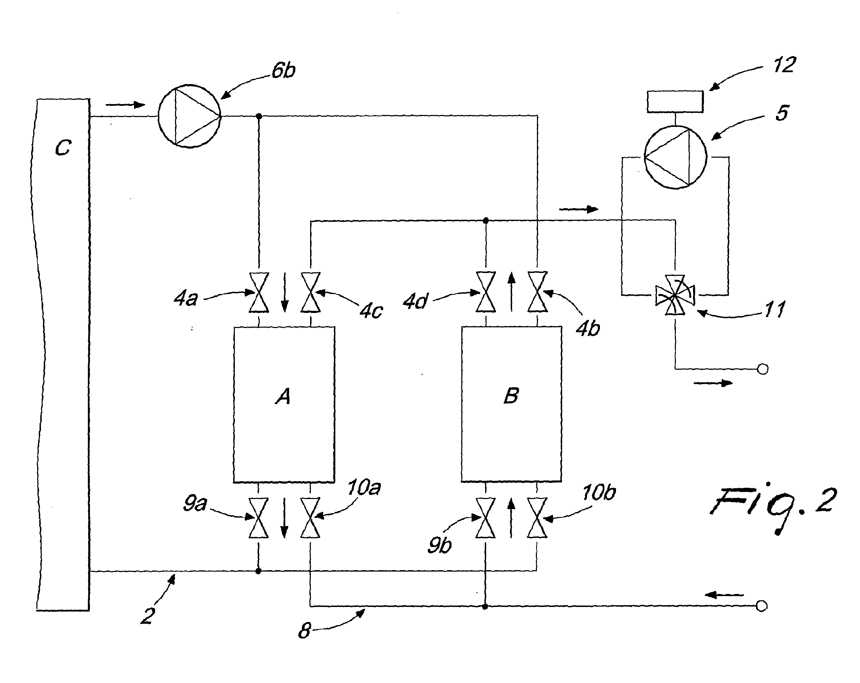

The diagrams shown in Figures 2 to 5 illustrate a system 1 with a dual activated-carbon filter (A and B), which is therefore capable of performing continuous purification of the air before it is introduced in the storage room C.

The components are substantially the same ones shown in Figure 1, but they are duplicated; the reference letter A designates the components related to the activated-carbon filter A and the letter B designates those related to the other activated-carbon filter B.

In this case also, the blower 5 is associated with a reversal valve 11, which is adapted to switch the flow during the regeneration step, so as to regenerate the activated-carbon filters A and B in countercurrent.

Advantageously, the blower 5 is connected functionally to an inverter 12, which is associated with a control device (not shown in the figures) and is adapted to increase the speed of the blower 5 (and therefore the flow-rate of the fluid medium through the discharge duct 3) during the step for regeneration of the activated-carbon filters A and B.

An additional fan 6b is also provided.

The system operates completely automatically and the steps are controlled by a PLC device.

The operating cycle is performed in six steps, during which the fans 5 and 6b run constantly.

The first step (shown schematically in Figure 2) provides absorption by the activated-carbon filter A and regeneration of the activated-carbon carbon filter B. The valves 4a, 4d, 9a and 9b are open and the reversal valve 11 is in the normal position. The additional fan 6b draws air from the storage room C and sends it to the first activated-carbon filter A, and at the same time returns purified air into the storage room C. The blower 5, optionally driven by the inverter 12 at a high frequency (for example 62 Hz, a flow-rate which is approximately 20% higher than a normal frequency of 50 Hz) draws air from the outside and conveys it through the second activated-carbon filter B for a period ranging from 5 to 10 minutes.

In the second step, or pre-switching step, the condition of the valves remains unchanged, while the inverter brings the frequency of the speed variator to the normal speed (50 Hz) for approximately 8-10 seconds.

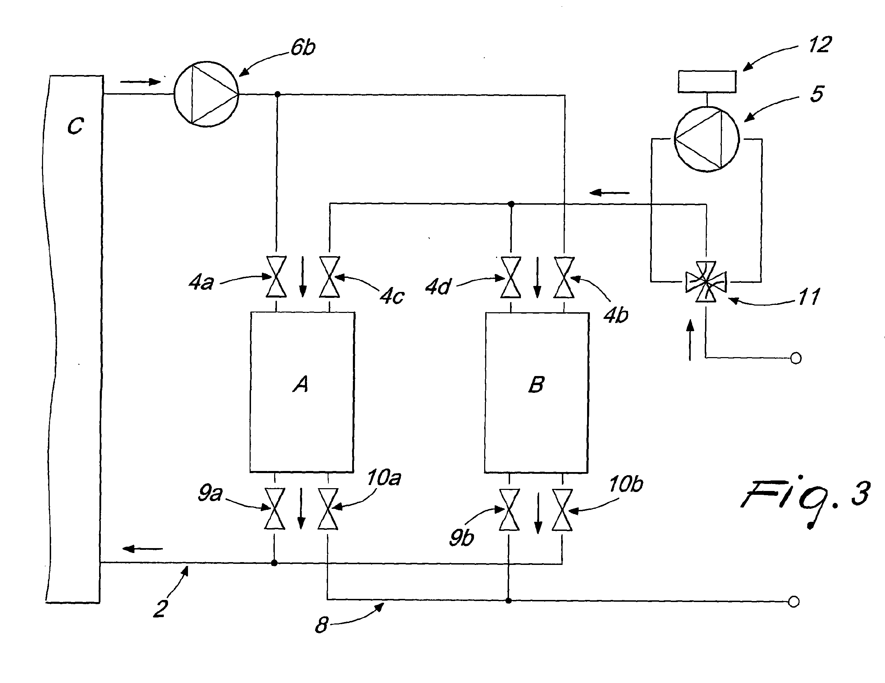

In the third step, or first switching step (shown in Figure 3), the valves 4b, 4c, 9a and 9b are open and the reversal valve 11 is in the switching position. The additional fan 6b draws air from the storage room C and sends it to the second activated-carbon filter B, and the air contained in said second activated-carbon filter B is expelled outside. The blower 5 draws air from the outside and sends it to the first activated-carbon filter A. The oxygen-poor air contained in the first activated-carbon filter A is returned to the storage room C. The duration of this step can range from 10 to 20 seconds depending on the flow-rate of the additional fan 6b and of the blower 5.

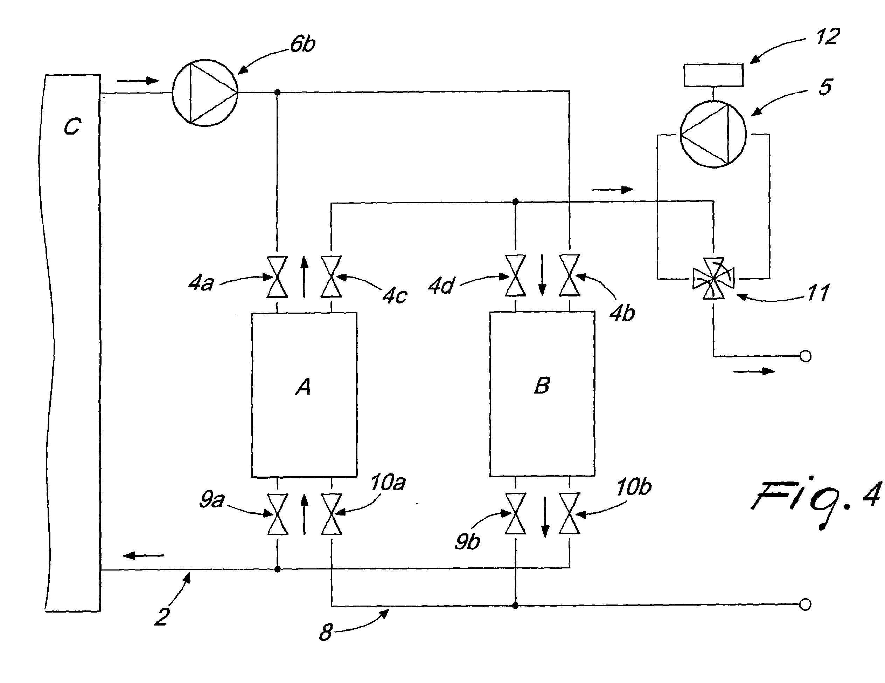

The fourth step (shown schematically in Figure 4) provides absorption by the activated-carbon filter B and regeneration of the activated-carbon filter A. The valves 4c, 4b, 10a and 10b are open and the reversal valve 11 is in the normal position. The additional fan 6b draws air from the storage room C and conveys it toward the second activated-carbon filter B, and at the same time returns purified air into the storage room C. The blower 5, optionally controlled by the inverter 12 at a high frequency (for example 62 Hz, a flow-rate which is approximately 20% higher than a normal frequency of 50 Hz) draws air, conveying it toward the first activated-carbon filter A for a period ranging 5 from to 10 minutes.

In the fifth step, or pre-switching step, the condition of the valves remains unchanged, while the inverter brings the frequency of the speed variator to the normal value (50 Hz) for approximately 8-10 seconds.

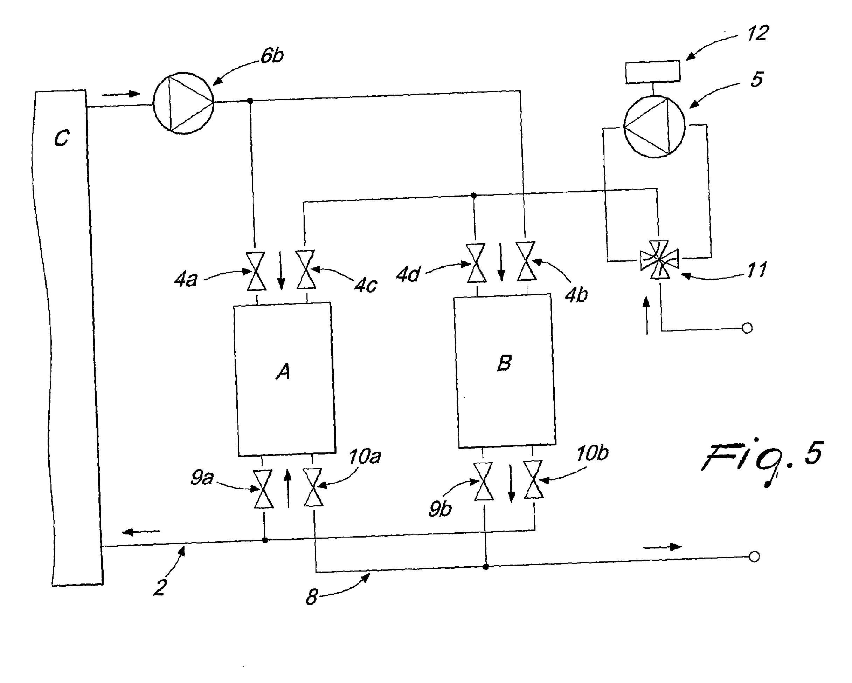

In the sixth step, or second switching step (shown in Figure 5), the valves 4a, 4d, 10a and 10b are open and the reversal valve 11 is in the switching position. The additional fan 6b draws air from the storage room C and sends it to the second activated-carbon filter B, and the air contained in said second activated-carbon filter B is expelled externally. The blower 5 draws air from the outside and sends it to the first activated-carbon filter A. The oxygen-poor air contained in the first activated-carbon filter A is returned to the storage room C. This step can last from 10 to 20 seconds, depending on the flow-rate of the additional fan 6b and of the blower 5.

The cycle then resumes from the first step.

The second and fifth steps are not indispensable for the operation of the system 1.

The valves 4a, 4b, 4c, 4d and 9a, 9b, 9c and 9d can be grouped into four three-way valves or into two four-way valves.

It has been found that a system according to the invention allows to improve the efficiency of activated-carbon filters without the aid of expensive injections of nitrogen or of oxygen absorbers. By improving efficiency while keeping the other conditions equal, the introduced oxygen is reduced.

All the characteristics of the invention indicated above as advantageous, convenient or the like, might also be omitted or be replaced with equivalents.

Thus, for example, all the valves that are used can be of the electrical and/or pneumatic type and can be controlled by a control unit according to preset programs.

Moreover, with reference to the embodiment with two activated-carbon filters, nothing prevents reversing, in the system, the positions of the blower 5 and of the additional fan 6b.

Moreover, the system might be provided with an oxygen absorption filter which is designed to absorb either the oxygen of the air before it is introduced in the controlled atmosphere environment/environments or the oxygen that is present in the, or each, activated-carbon filter before the passage of the air to be filtered.

In practice, the materials used, as well as the dimensions, may be any according to requirements.

All the details may further be replaced with other technically equivalent elements.

## Claims

1. A system (1) for suppressing carbon dioxide from controlled atmosphere environments, comprising at least one activated-carbon filter (B), which is connected to an intake duct (2) and a discharge duct (3), said intake duct (2) and said discharge duct (3) being adapted to introduce and extract air into and from a storage room (C), at least one blower (5) being provided along said discharge duct (3), said blower (5) having, upstream or downstream of said at least one activated-carbon filter (B), in succession, an first discharge duct (6) which can be controlled by a check valve (7), and a first valve (4), **characterized in that** said blower (5) is associated with a reversal valve (11), which reversal valve (11) is adapted to switch the flow during the regeneration step so as to perform the regeneration of said at least one activated-carbon filter (B) in countercurrent.

2. The system (1) for suppressing carbon dioxide according to claim 1, **characterized in that** said at least one blower (5) is functionally connected to an inverter (12) which is associated with a control device and is adapted to increase the speed of said blower (5) during said step for regeneration of said least one activated-carbon filter (B).

3. The system (1) for suppressing carbon dioxide according to one or more of the preceding claims, **characterized in that** it comprises two activated-carbon filters (A, B) in parallel for continuous operation.

4. The system (1) for suppressing carbon dioxide according to one or more of the preceding claims, **characterized in that** it comprises at least one filter for absorbing oxygen, which is designed to absorb either the oxygen of the air before it is introduced in the controlled-atmosphere environment or environments, or the oxygen that is present in the, or each, activated-carbon filter before the passage of the air to be filtered.

5. The system (1) for suppressing carbon dioxide according to one or more of the preceding claims, **characterized in that** it comprises an additional fan (6b) which is adapted to draw air from said storage room.

6. The system (1) for suppressing carbon dioxide according to one or more of the preceding claims, **characterized in that** it comprises a respective reservoir which is associated with each activated-carbon filter (A, B).

## Patentansprüche

1. Ein System (1) zur Unterdrückung von Kohlendioxid aus Umgebungen mit kontrollierter Atmosphäre, das mindestens einen Aktivkohlefilter (B) umfasst, der mit einem Einlassrohr (2) und einem Abzugsrohr (3) verbunden ist, wobei das Einlassrohr (2) und das Abzugsrohr (3) ausgebildet sind, um Luft in einen Lagerraum (C) einzuführen und daraus zu extrahieren, wobei mindestens ein Gebläse (5) entlang dem Abzugsrohr (3) bereitgestellt ist und wobei das Gebläse (5), stromaufwärts oder stromabwärts von dem mindestens einen Aktivkohlefilter (B), in Folge ein erstes Abzugsrohr (6) hat, das von einem Absperrventil (7) gesteuert werden kann, und ein erstes Ventil (4) hat, **dadurch gekennzeichnet, dass** das Gebläse (5) mit einem Umsteuerventil (11) verknüpft ist, wobei das Umsteuerventil (11) ausgebildet ist, um die Strömung während des Regenerationsschritts umzuschalten, um die Regerieration des mindestens einen Aktivkohlefilters (B) in Gegenströmung durchzuführen.

2. Das System (1) zur Unterdrückung von Kohlendioxid gemäß Anspruch 1, **dadurch gekennzeichnet, dass** das mindestens eine Gebläse (5) funktionell mit einem Umrichter (12) verbunden ist, der mit einer Steuervorrichtung verknüpft und ausgebildet ist, um die Geschwindigkeit des Gebläses (5) während des Schritts zur Regeneration des mindestens einen Aktivkohlefilters (B) zu erhöhen.

3. Das System (1) zur Unterdrückung von Kohlendioxid gemäß einem oder mehreren der obigen Ansprüche, **dadurch gekennzeichnet, dass** es zwei parallel angeordnete Aktivkohlefilter (A, B) für den Dauerbetrieb umfasst.

4. Das System (1) zur Unterdrückung von Kohlendioxid gemäß einem oder mehreren der obigen Ansprüche, **dadurch** gekenrizeichnet, dass es mindestens einen Filter zur Absorption von Sauerstoff umfasst, der dazu dient, entweder den Sauerstoff der Luft zu absorbieren, bevor er in die Umgebung oder Umgebungen mit kontrollierter Atmosphäre eingeführt wird, oder den Sauerstoff, der vor dem Durchlauf der zu filternden Luft in dem, oder jedem, Aktivkohlefilter vorhanden ist.

5. Das System (1) zur Unterdrückung von Kohlendioxid gemäß einem oder mehreren der obigen Ansprüche, **dadurch gekennzeichnet, dass** es einen zusätzlichen Lüfter (6b) umfasst, der ausgebildet ist, um Luft aus dem Lagerraum zu ziehen.

6. Das System (1) zur Unterdrückung von Kohlendioxid gemäß einem oder mehreren der obigen Anspruche, **dadurch gekennzeichnet, dass** es einen entsprechenden Speicher umfasst, der mit jedem Aktivkohlefilter (A, B) verknüpft ist.

## Revendications

1. Système (1) pour supprimer le dioxyde de carbone dans des environnements sous atmosphère contrôlée, comprenant au moins un filtre à charbon activé (B), qui est connecté à une conduite d'admission (2) et une conduite de décharge (3), ladite conduite d'admission (2) et ladite conduite de décharge (3) étant adaptées pour introduire et extraire de l'air dans et depuis une chambre de stockage (C), au moins une soufflante (5) étant disposée le long de ladite conduite de décharge (3), ladite soufflante (5) ayant, en amont ou en aval dudit au moins un filtre à charbon activé (B), à la suite, une première conduite de décharge (6) qui peut être commandée par un clapet anti-retour (7), et une première vanne (4), **caractérisé en ce que** ladite soufflante (5) est associée à une vanne d'inversion (11), laquelle vanne d'inversion (11) est adaptée pour commuter le courant durant l'étape de régénération de façon à effectuer la régénération dudit au moins un filtre à charbon activé (B) à contre-courant.

2. Système (1) pour supprimer le dioxyde de carbone selon la revendication 1, **caractérisé en ce que** ladite au moins une soufflante (5) est fonctionnellement connectée à un inverseur (12) qui est associé à un dispositif de commande et est adapté pour augmenter la vitesse de ladite soufflante (5) durant ladite étape de régénération dudit au moins un filtre à charbon activé (B).

3. Système (1) pour supprimer le dioxyde de carbone selon une ou plusieurs des revendications précédentes, **caractérisé en ce qu'**il comprend deux filtres à charbon activé (A, B) en parallèle pour une opération en continu.

4. Système (1) pour supprimer le dioxyde de carbone selon une ou plusieurs des revendications précédentes, **caractérisé en ce qu'**il comprend au moins un filtre pour absorber l'oxygène, qui est conçu pour absorber soit l'oxygène de l'air avant qu'il soit introduit dans l'environnement ou les environnements à atmosphère contrôlée, soit l'oxygène qui est présent dans le ou chaque filtre à charbon activé avant le passage de l'air devant être filtré.

5. Système (1) pour supprimer le dioxyde de carbone selon une ou plusieurs des revendications précédentes, **caractérisé en ce qu'**il comprend un ventilateur additionnel (6b) qui est adapté pour aspirer l'air depuis ladite chambre de stockage.

6. Système (1) pour supprimer le dioxyde de carbone selon une ou plusieurs des revendications précédentes, **caractérisé en ce qu'**il comprend un réservoir respectif qui est associé à chaque filtre à charbon activé (A, B).
